# EUROPEAN PATENT APPLICATION

(11) **EP 1 976 098 A2**
(43) Date of publication of application: **01.10.2008**
(21) Application number: 08153010.7
(22) Date of filing: 19.03.2008
(51) Int. Cl.: H02K 5/20

(54) **Motor cooling arrangement**

(30) Priority: 23.03.2007 US 690266
(71) Applicant: GENERAL ELECTRIC COMPANY, Schenectady, NY 12345 (US)
(72) Inventor: Telore, Rajendra Narayan, 414105, Maharashtra (IN); Tunuguntla, Madhava Prasad, 522201, Andhra Pradesh (IN); Doctor, Matthew, Huntington, IN 46750 (US)
(74) Representative: Illingworth-Law, William Illingworth

(57) **Abstract**

At least one cooling duct is provided for a motor that includes a frame. The cooling duct has a wall supported by the frame that, in turn, comprises an arcuate surface portion and a non-arcuate surface portion that together define a bore. A method of increasing the transfer of heat away from a motor is also presented.

## Description

### Field of the Invention

The subject matter described herein relates generally to devices and methods for more efficient heat transfer and, more particularly, to devices and methods for increasing the transfer of thermal energy away from a motor.

### Related Art

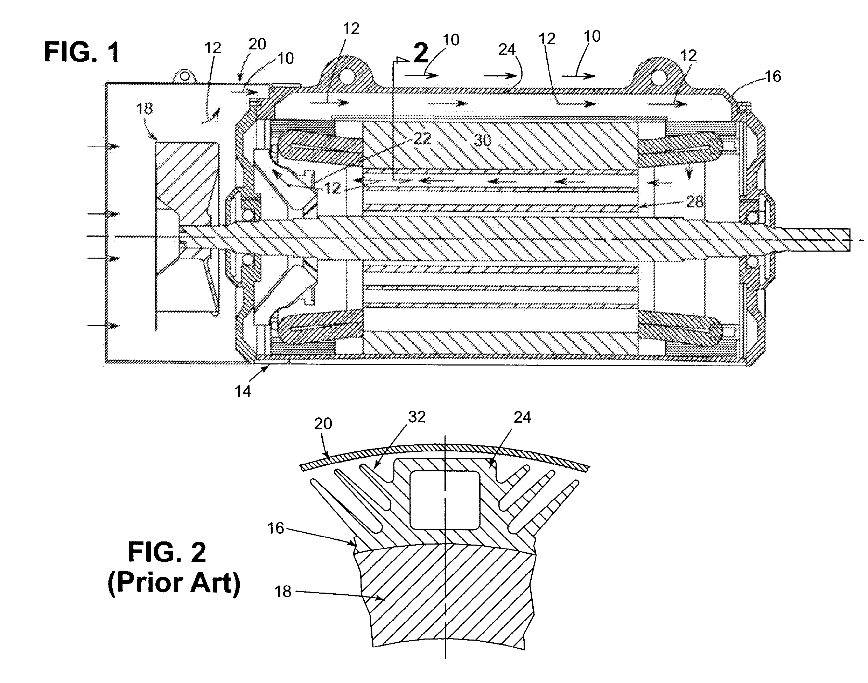

The need to incorporate a heat transfer system into a motor assembly is well known in the art. These systems draw heat away from the motor during operation. For example, one typical, motor cooling system is shown in Figures 1 and 2. As shown, the cooling system has an external cooling circuit and an internal cooling circuit illustrated by arrows 10 and 12, respectively, to extract heat energy from a motor 14. In the external cooling circuit, air is forced over an external surface of a frame 16 by an external fan 18 through guides (not numbered) provided in a fan cover 20. In the internal cooling circuit, air is circulated by an internal fan 22 located in the frame 16 through frame ducts 24 and rotor ducts 26 that collect heat energy from a rotor 28 and a core 30.

As best seen in Figure 2, heat energy from the internal cooling circuit is passed to, and carried away to ambient air by, the external cooling circuit via cooling fins 32 that extend from the frame ducts 24. Also, it can be seen that the frame duct 24 defines a bore that is generally rectangular shaped in cross section.

### Brief Description of the Invention

In accordance with an embodiment of the present invention, at least one cooling duct is provided for a motor that comprises a frame. The cooling duct comprises a wall supported by the frame and in turn, the wall comprises an arcuate surface portion and a non-arcuate surface portion that together define a bore.

In another aspect of the present invention a cooling system is provided for a motor that comprises a rotatable shaft and at least one fan interconnected with the shaft. The cooling system comprises a generally tubular frame extendable coaxially with the rotatable shaft. The tubular frame comprises at least one cooling duct defining a bore that, in cross section, is generally D-shaped.

In a further aspect of the present invention, a method of increasing the transfer of heat away from a motor is presented. The method comprises providing a frame; configuring the frame to include at least one of the cooling duct that defines a bore that, in cross section, is generally D-shaped; and circulating air through the cooling duct during operation of the motor.

### Brief Description of the Drawings

The following detailed description of embodiments, provided by way of example only, is made with reference to the accompanying drawings, in which:
Figure 1 is a cross sectional view of a motor, taken along a longitudinal axis of the motor, showing an external circuit and an internal cooling circuit;
Figure 2 an enlarged, sectional view taken of the motor taken along line 2--2 of Figure 1 and showing a prior art cooling duct;
Figure 3 is a cross sectional view, taken along a transverse axis of a motor, showing cooling ducts in accordance with an embodiment of the present invention;
Figure 4 is an enlarged, partial view of the motor taken along circle 4 of Figure 3 showing one of the cooling ducts; and
Figure 5 is a flow diagram illustrating a method of increasing the transfer of heat away from a motor in accordance with another embodiment of the present invention.

### Detailed Description of the Preferred Embodiment

During use of a motor such as that shown in Figures 1 and 2 and described above, the rotor 28 may become over heated because, it has been found that, the frame ducts 24 do not transfer sufficient heat to the ambient air. The efficient removal of heat, or an effective reduction in temperature rise, is a critical parameter affecting the power generation of a motor. The lower the temperature rise, the greater the power that can be generated by the motor. Accordingly, it is hereby proposed, in one aspect of the present invention, to increase airflow through the frame ducts 24 to increase the heat transferred away from the motor and thereby lower the temperature rise of the motor.

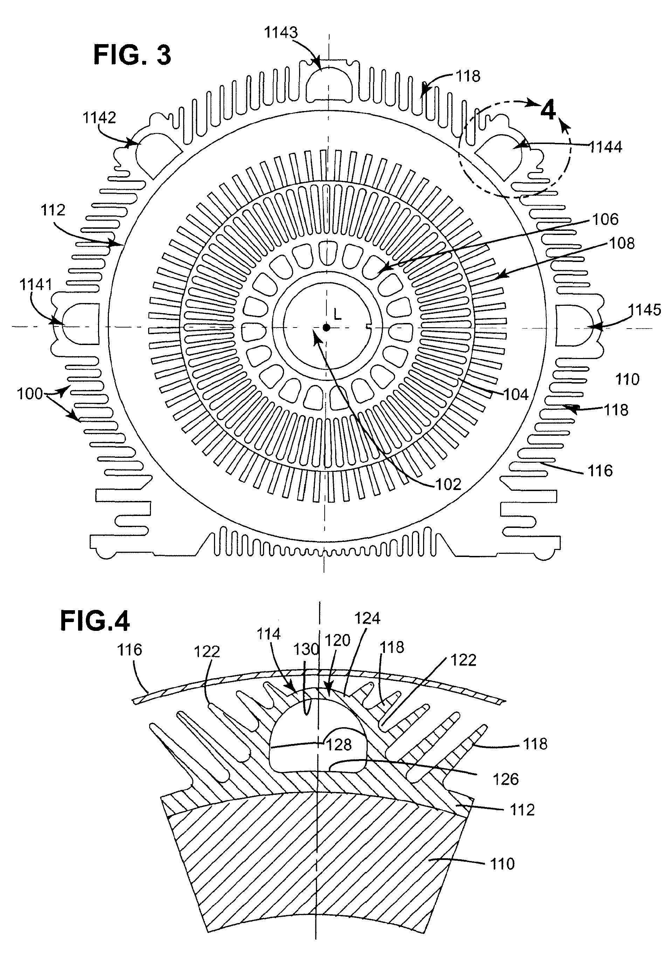

Referring now to Figure 3, a section of a motor comprising ducts in accordance with one embodiment of the present invention is illustrated generally at 100. In this embodiment, the motor 100 comprises a rotor shaft 102, rotor 104, rotor cooling ducts 106, stator 108, stator core 110, frame 112, frame cooling ducts 1141, 1142, 1143, 1144, 1145 and fan cover 116.

Each of the rotor shaft 102, rotor 104, stator 108, stator core 110 and fan cover 116 are well known components of an electrical motor and, therefore, will not be described in further detail herein. The rotor cooling ducts 106 may be arranged similar to those described above in connection with Figures 1 and 2 and form part of an internal cooling circuit similar to that described above. It will be appreciated that another portion of the internal cooling circuit comprises the frame cooling ducts 1141, 1142, 1143, 1144, 1145 each of which may communicate with the rotor cooling ducts 106.

In accordance with this embodiment of the present invention, the frame 112 is generally tubular in configuration and may comprise a substance that is moldable while also being a relatively good conductor of thermal energy such as a metallic substance or a composite substance having conductive properties. Two particularly suitable substances are cast iron and aluminum. The frame 112 comprises cooling fins 118 extending generally radially therefrom. The cooling fins 118 function to increase surface area contact with cooling air that forms part of an external cooling circuit that may be similar to the external cooling circuit described above in connection with Figures 1 and 2. During operation of the motor 100, thermal energy created by the centrally located rotor 104 is transferred out of the motor via the internal cooling circuit that warms the frame 112 and the cooling fins 118. In turn, heat from the cooling fins 118 is transferred to ambient air by the external cooling circuit.

The frame cooling ducts 1141, 1142, 1143, 1144, 1145 are circumferentially spaced about the frame 112, while also being spaced in a radial direction from, and extending in the same general direction as, a longitudinal axis (L) of the motor 100. In the illustrated embodiment, five cooling ducts 1141, 1142, 1143, 1144, 1145 are provided which may be equally spaced approximately 45 degrees apart about the longitudinal axis L. As shown, the cooling ducts 1141, 1142, 1143, 1144, 1145 may be provided along approximately 180 degrees of an upper portion (not numbered) of the circumference of the frame 112. In other optional embodiments, unequal spacing of the cooling ducts 1141, 1142, 1143, 1144, 1145, any number of cooling ducts or the extent along the upper portion of the frame 112 of greater than or less than 180 degrees are contemplated.

Referring now to Figure 4, an enlarged view of one frame cooling duct 1144 is shown, although, it will be understood that, in this embodiment, each of the other cooling ducts 1141, 1142, 1143, 1145 are similar. As shown, the frame cooling duct 1144 comprises a wall 120 that is supported by the frame 112. The wall 120 defines a bore (not numbered) that, in cross section, is generally D-shaped, and which, as described in more detail below, increases air flow therethrough relative to the prior art. The wall 120 comprises a pair of spaced side wall portions 122 and a connecting wall portion 124 that interconnects the side wall portions. The bore is defined by a non-arcuate portion (not numbered) and an arcuate portion (also not numbered).

The non-arcuate portion may comprise any one or more of a generally flat surface 126 of the frame 112 and of a pair of generally parallel inner surfaces 128 of a respective side-wall portion 122. The arcuate portion may comprise one or more arcuate inner surfaces such as inner surface 130 of the connecting wall portion 124. The inner surfaces 128 extend between the surfaces 126 and 130. In one particular optional embodiment, a height of the bore may range from approximately 1.88 inches (4.78 cm) to 2.48 inches (6.30 cm) with a given radius that ranges from approximately 1.6 inches (4.06 cm) to approximately 2.1 inches (5.33 cm). In the illustrated embodiment, each bore may be substantially the same height.

In accordance with a particular aspect of the present invention, the cooling fins 118 may extend from each side wall portion 122 along with the connecting wall portion 124. As a result, the total coolable surface area of the present embodiment is greater than a coolable surface area of prior art arrangements where it is seen that cooling fins do not extend from the connecting wall portion. The cooling fins 118, at selected ducts 1142 and 1144, each generally extend at an acute angle to each respective parallel inner surface. The cooling fins 118 may be spaced approximately 1.25 inches (3.18 cm) and have a fin height of approximately 3.00 inches (7.62 cm). In a comparison of cross sectional configurations of rectangular and D-shapes, it was found that the D-shaped configuration provides substantial advantage over the prior art rectangular shape for a similar cross sectional area. The results of analytical calculations and finite element analysis are summarized in the below Table.

**Table**

| | | From Analytical Calculation | | | From Finite Element Analysis | | | |
|---|---|---|---|---|---|---|---|---|
| For Duct | Equivalent Dia (m) | Pressure drop (Pa) | Volume flow rate (cubic m/sec) | **Flow resistance (Pa/(cubic m/sec))** | Average Pressure drop (Pa) | Volume flow rate (cubic m/sec) | **Flow resistance (Pa/(cubic m/sec))** | Actual cross section area (square m) |
| Rectangular Duct 2"x2.7" | 0.06136 | 8.75 | 0.0135 | **648.14815** | 6.89166 | 0.01348 | **511.25074** | 0.003395 |
| D Section Height=2.7", Width=1.09558" | 0.0639329 | 8.29 | 0.0147 | **563.94558** | 6.5492 | 0.013696 | **478.18** | 0.0034153 |

| | | | | | | | | |
|---|---|---|---|---|---|---|---|---|
| Flow resistance=(Pressure drop/ Volume flow rate) | | | | | | | | |

As seen above, the analytical calculations as well as that involving finite element analysis clearly shows that for two ducts of same cross sectional areas, a D-shaped duct has a lesser flow resistance when compared to that of a prior art rectangular shaped duct.

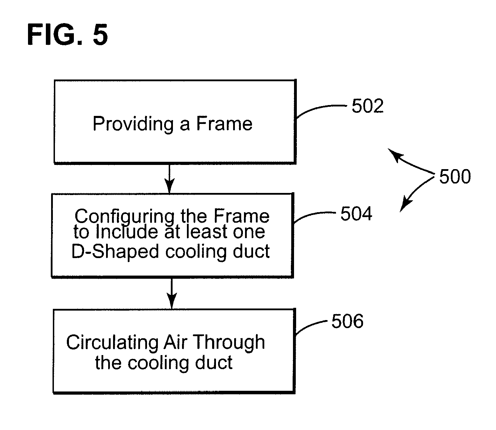

Referring now to Figure 5, in another embodiment of the present invention a method of increasing the transfer of heat away from a motor is shown generally at 500. The method comprises providing a frame as shown at 502; configuring the frame to include at least one cooling duct that defines a bore that, in cross section, is generally D-shaped as shown at 504; and, as shown at 506, circulating air through the cooling duct during operation of the motor.

While the present invention has been described in connection with what are presently considered to be the most practical and preferred embodiments, it is to be understood that the present invention is not limited to these herein disclosed embodiments. Rather, the present invention is intended to cover all of the various modifications and equivalent arrangements included within the spirit and scope of the appended claims.

## Claims

1. At least one cooling duct (1141) for a motor (100) comprising a frame (112), the cooling duct comprising:
a wall (120) supported by the frame and wherein the wall comprises an arcuate surface portion and a non-arcuate surface portion which together define a bore.

2. The at least one cooling duct of claim 1, wherein the bore is generally D-shaped in cross section, and wherein the wall comprises a pair of spaced side wall portions (122) each extending from the frame and a connecting wall (124) portion that interconnects the side wall portions.

3. The at least one cooling duct of claim 1 or claim 2, wherein the non-arcuate surface portion comprises a generally flat surface (126) of the frame and a pair of generally parallel inner surfaces (128) each of a respective side-wall portion and wherein the arcuate surface portion comprises an arcuate inner surface of the connecting wall portion.

4. The at least one cooling duct of any one of the preceding claims, further comprising a plurality of cooling fins (32) extending from each side wall portion and the connecting wall portion, and wherein the cooling fins each extend at an acute angle to each respective parallel inner surface.

5. The at least one cooling duct of any one of the preceding claims, wherein the at least one cooling duct comprises a plurality of cooling ducts each being spaced radially from, and extending in generally a same direction as, a longitudinal axis (L) of the motor, and wherein the plurality of cooling ducts are equally spaced along a portion of a circumference of the frame.

6. A cooling system for a motor comprising a rotatable shaft (102) and at least one fan (18) interconnected with the shaft, the cooling system comprising:
a generally tubular frame extendable coaxially with the rotatable shaft, the tubular frame comprising at least one cooling duct defining a bore that, in cross section, is generally D-shaped.

7. The cooling system of claim 6, wherein the at least one cooling duct comprises a pair of spaced side wall portions and a connecting wall portion (124) that interconnects the side wall portions, and wherein the bore is defined by a generally flat surface of the frame, a pair of generally parallel inner surfaces each of a respective side-wall portion and an arcuate inner surface of the connecting wall portion.

8. The cooling system of claim 6 or claim 7, further comprising a plurality of cooling fins extending from each side wall portion and the connecting wall portion, and wherein the cooling fins each extend at an acute angle to each respective parallel inner surface.

9. The cooling system of any one of claims 6 to 8, wherein the at least one cooling duct comprises a plurality of cooling ducts each being spaced radially from, and extending in generally a same direction as, a longitudinal axis of the motor, and wherein the plurality of cooling ducts are equally spaced along a portion of a circumference of the tubular frame.

10. A method of increasing the transfer of heat away from a motor, comprising:
providing a frame;
configuring the frame to include at least one of the cooling duct that defines a bore that, in cross section, is generally D-shaped; and
circulating air through the cooling duct during operation of the motor.
